(19) Europäisches Patentamt
European Patent Office
Office européen des brevets

(11) EP 3 555 201 B1

(12) **EUROPEAN PATENT SPECIFICATION**

(45) Date of publication and mention of the grant of the patent:
**16.09.2020 Bulletin 2020/38**

(21) Application number: **17822043.0**

(22) Date of filing: **15.12.2017**

(51) Int Cl.:
***C08L 21/00*** *(2006.01)* ***C08L 9/00*** *(2006.01)*
***B60C 1/00*** *(2006.01)* ***B60C 11/12*** *(2006.01)*

(86) International application number:
**PCT/JP2017/045019**

(87) International publication number:
**WO 2018/110684 (21.06.2018 Gazette 2018/25)**

(54) **A TIRE COMPRISING A TREAD**

REIFEN MIT EINER LAUFFLÄCHE

PNEUMATIQUE COMPRENANT UNE BANDE DE ROULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2016 PCT/JP2016/087345**

(43) Date of publication of application:
**23.10.2019 Bulletin 2019/43**

(73) Proprietor: **Compagnie Générale des Etablissements Michelin**
**63000 Clermont-Ferrand (FR)**

(72) Inventors:
- **MORIYAMA, Masahiko**
**Tokyo 163-1073 (JP)**
- **SAKURADA, Tomoya**
**Tokyo 163-1073 (JP)**

(74) Representative: **Regimbeau**
**20, rue de Chazelles**
**75847 Paris Cedex 17 (FR)**

(56) References cited:
**EP-A1- 2 748 018**
**WO-A1-2015/016388**
**WO-A1-2015/016390**
**WO-A2-2013/032468**
**US-A1- 2011 190 416**
**US-A1- 2013 299 053**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 555 201 B1

## Description

### Technical Field

The field of the invention is that of rubber compositions for tires with specific tread pattern designs, more precisely rubber compositions for tire treads suitable for snow tires or winter tires capable of rolling over ground surfaces covered with snow.

### Background Art

A tire for winter driving, referred to as a snow tire, must, in a known manner, meet a large number of often conflicting technical requirements, including low rolling resistance, high wear resistance and also good grip on dry ground, on wet ground and on snowy ground.

As is known, the snow tires classified in a category of use "snow", identified by an inscription the alpine symbol ("3-peak-mountain with snowflake), marked on their sidewalls, mean tires whose tread patterns, tread compounds and/or structures are primarily designed to achieve, in snow conditions, a performance better than that of normal tires intended for normal on-road use with regard to their abilities to initiate, maintain or stop vehicle motion.

Snowy ground, referred to as white ground, has the feature of having a low friction coefficient, which leads to the development of snow tires having a specific rubber composition. The grip performance of these tires on dry ground may be, under certain usage conditions, inferior to that of summer tires.

Optimization of the tread in order to find the best compromise between the grip on dry ground and the grip on snowy ground therefore remains a constant concern of tire designers.

### Summary of Invention

### Technical Problem

Now, during their research, the inventors have discovered that a specific rubber composition and a specific pattern design for a tread of a tire makes it possible to unexpectedly improve the grip performance of the tire on snow without deteriorating the grip performance on dry ground.

In the present description, unless expressly stated otherwise, all the percentages (%) indicated are percentages by weight (wt%).

The expression "elastomer matrix" is understood to mean, in a given composition, all of the elastomers present in said rubber composition.

The abbreviation "phr" signifies parts by weight per hundred parts by weight of the elastomer matrix in the considered rubber composition.

In the present description, unless expressly indicated otherwise, each $Tg_{DSC}$ (glass transition temperature) is measured in a known way by DSC (Differential Scanning Calorimetry) according to Standard ASTM D3418-08.

Any interval of values denoted by the expression "between a and b" represents the range of values of greater than "a" and of less than "b" (i.e. the limits a and b excluded) whereas any interval of values denoted by the expression "from a to b" means the range of values going from "a" to "b" (i.e. including the strict limits a and b).

The expression "based on" should be understood in the present application to mean a composition comprising the mixture(s) and/or the product of the reaction of the various constituents used, some of the constituents being able or intended to react together, at least partly, during the various manufacturing phases of the composition, in particular during the vulcanization (curing).

A "tire" means all types of resilient tires whether or not subjected to an internal pressure when the tire is running.

As a tire has a geometry of revolution about an axis of rotation, the geometry of the tire is generally described in a meridian plane containing the axis of rotation of the tire, and the following definitions of directions of the tire are understood in the present application:

- A radial direction is a direction perpendicular to the axis of rotation of the tire;
- An axial direction is a direction parallel to the axis of rotation of the tire;
- A circumferential direction is a direction perpendicular to the meridian plane.

A plane being perpendicular to the axis of rotation of the tire and passing through the middle of a tread surface of the tire is referred to as an equatorial plane of the tire.

In what follows, expressions "radially", "axially" and "circumferentially" respectively mean "in the radial direction", "in the axial direction" and "in the circumferential direction". Expressions "radially on the inside (radially inner or radially

internal), or respectively radially on the outside (radially outer or radially external)" mean "closer or, respectively, further away, from the axis of rotation of the tire, in the radial direction, than". Expressions "axially on the inside (axially inner or axially interior) or respectively axially on the outside (axially outer or axially exterior)" mean "closer or, respectively further away, from the equatorial plane, in the axial direction, than". Respective dimensions of a given element in the radial, axial and circumferential directions will also be denoted "radial thickness or height", "axial width" and "circumferential length" of this element. Expression "laterally" means "in the circumferential or axial direction".

The "tread of a tire" means a quantity of rubber composition delimited by lateral surfaces and by two main surfaces, one of which is intended to come into contact with the ground when the tire is running.

A "tread surface" means the surface formed by the points of the tread of the tire that come into contact with the ground when the tire is running.

A "basic pattern" means a particular grouping of raised elements. The basic patterns of the tread are derived from one and the same elementary pattern, but may be on different scales.

A "pitch of a basic pattern" means the length of said basic pattern in a circumferential direction X.

A "groove" means a "cut-out" of which the faces of material do not touch under normal running conditions. In general, the width of a groove is greater than or equal to 1 mm.

A "sipe" means a cut-out of which the faces of material touch under normal running conditions. In general, the width of the sipe is less than 1 mm and the depth of the sipe in the tread is greater than or equal to 3 mm.

**Solution to Problem**

A first aspect of the invention is a tire (1) having a tread (2) comprising a rubber composition based on least:

an elastomer matrix;
a reinforcing filler comprising between 80 and 200 phr of a reinforcing inorganic filler;
a plasticizing agent; and
between 1 and 150 phr of particles having a particle size of between 100 and 10 mesh;
wherein the tread (2) comprises:

a tread surface (3) intended to be in contact with the ground when the tire (1) is running;
a sequence of basic pattern(s) (4) circumferentially arranged, wherein each basic pattern (4) has a width (Wm) axially extending over at least 80% of the width (W) of the tread (2), each basic pattern has a pitch (P) circumferentially extending, and each basic pattern (4) comprises a plurality of raised elements (5), one or more of which are provided with sipes (6) opening onto the tread surface (3), wherein each sipe (6) has a width of less than 1 mm and a depth of at least 3 mm;
wherein the tread (2) has a sipe density (SD) defined as

[Math.1]

$$SD = \frac{\sum_{i} li}{P * Wm}$$

the sipe density (SD) being less than 60μm/mm$^2$;
where i is the number of sipe(s) (6) in the pattern, $l_i$ is the length of the ith sipe on the tread surface (3), P is the pitch of the basic pattern, Wm is the width of the basic pattern(s) (4) .

**Advantageous Effects of Invention**

The rubber composition of the tread (2) of the tire (1) makes it possible to improve the grip performance of the tire (1) on snow without deteriorating the grip performance on dry ground.

**Description of Embodiments**

The tire(s) (1) of the invention are particularly intended to equip passenger motor vehicles, including 4×4 (four-wheel drive) vehicles and SUV (Sport Utility Vehicles) vehicles, and industrial vehicles particularly selected from vans and heavy duty vehicles (i.e., bus or heavy road transport vehicles (lorries, tractors, trailers)).

Each of the below aspect(s), the embodiment(s) and the variant(s) including each of the preferred range(s)

and/or matter(s) may be applied to any one of the other aspect(s), the other embodiment(s) and the other variant(s) of the invention unless expressly stated otherwise.

Elastomer (or loosely "rubber", the two terms being regarded as synonyms) of the "diene" type is to be understood in a known manner as an (meaning one or more) elastomer derived at least partly (i.e. a homopolymer or a copolymer) from diene monomers (monomers bearing two carbon-carbon double bonds, conjugated or not).

These diene elastomers can be classified into two categories: "essentially unsaturated" or "essentially saturated". Generally, the expression "essentially unsaturated" is understood to mean a diene elastomer resulting at least in part from conjugated diene monomers having a content of units of diene origin (conjugated dienes) which is greater than 15% (mol %); thus it is that diene elastomers such as butyl rubbers or diene/$\alpha$ -olefin copolymers of the EPDM type do not fall under the preceding definition and may especially be described as "essentially saturated" diene elastomers (low or very low content of units of diene origin, always less than 15%). In the category of "essentially unsaturated" diene elastomers, the expression "highly unsaturated" diene elastomer is understood to mean in particular a diene elastomer having a content of units of diene origin (conjugated dienes) which is greater than 50%.

Although it applies to any type of diene elastomer, a person skilled in the art of tires will understand that the invention is preferably employed with essentially unsaturated diene elastomers.

Given these definitions, the expression diene elastomer capable of being used in the compositions in accordance with the invention is understood in particular to mean:

(a) - any homopolymer obtained by polymerization of a conjugated diene monomer, preferably having from 4 to 12 carbon atoms;

(b) - any copolymer obtained by copolymerization of one or more conjugated dienes with one another or with one or more vinyl aromatic compounds preferably having from 8 to 20 carbon atoms.

The following are suitable in particular as conjugated dienes: 1,3-butadiene, 2-methyl-1,3-butadiene, 2,3-di($C_1$-$C_5$ alkyl)-1,3-butadienes, such as, for example, 2,3-dimethyl-1,3-butadiene, 2,3-diethyl-1,3-butadiene, 2-methyl-3-ethyl-1 ,3-butadiene or 2-methyl-3-isopropyl-1,3-butadiene, an aryl-1,3-butadiene, 1,3-pentadiene or 2,4-hexadiene. The following, for example, are suitable as vinylaromatic compounds: styrene, ortho-, meta- or para-methylstyrene, the"vinyltoluene" commercial mixture, para-(tert-butyl) styrene, methoxystyrenes, chlorostyrenes, vinylmesitylene, divinylbenzene or vinylnaphthalene.

A second aspect of the invention is the tire (1) according to the first aspect, wherein the elastomer matrix comprises at least a diene elastomer selected from the group consisting of polybutadienes (BRs), synthetic polyisoprenes (IRs), natural rubber (NR), butadiene copolymers, isoprene copolymers, and the mixtures thereof.

A third aspect of the invention is the tire (1) according to the first aspect, wherein the elastomer matrix comprises 20 to 100 phr of a first diene elastomer bearing at least one SiOR function, R being a hydrogen atom or a hydrocarbon radical, and optionally, 0 to 80 phr of a second diene elastomer which is different from the first diene elastomer.

According to a preferred embodiment of the third aspect, the first diene elastomer may be selected from the group consisting of polybutadienes (BRs), synthetic polyisoprenes (IRs), natural rubber (NR), butadiene copolymers, and the mixtures thereof; such copolymers are selected more preferably from the group consisting of butadienestyrene copolymers (SBRs) and the mixtures thereof.

According to a preferred embodiment of this embodiment or the third aspect, the first diene elastomer may have any microstructure which depends on the polymerization conditions used, in particular on the presence or absence of a modifying and/or randomizing agent and on the amounts of modifying and/or randomizing agent employed. This elastomer may, for example, be a block, statistical, sequential or micro sequential elastomer and may be prepared in dispersion or in solution.

Generally, a function borne by an elastomer, particularly a diene elastomer, may be located on the elastomer chain end(s) or may not be located at the elastomer chain ends, that is, may be away from the chain ends. The first case occurs for example when the diene elastomer is prepared using a polymerization initiator bearing the function or using a functionalizing agent. The second case occurs for example when the diene elastomer is modified by the use of a coupling agent or star-branching agent bearing the function.

The expression "hydrocarbon radical" means a monovalent group essentially consisting of carbon and hydrogen atoms. Such a group may comprise at least one heteroatom, and it is known that the assembly formed by the carbon and hydrogen atoms represents the major number fraction in the hydrocarbon radical, for example alkyl or alkoxyalkyl; preferably assembly formed by the carbon and hydrogen atoms represents the entirety of the hydrocarbon radical(s), for example alkyl. Such a SiOR (R is alkyl or alkoxyalkyl) is referred as an "alkoxysilane" function. While, a SiOH (R is a hydrogen atom) is referred as a "silanol" function.

A fourth aspect of the invention is the tire (1) according to the third aspect, wherein the first diene elastomer is a styrene-butadiene copolymer, preferably a solution styrene-butadiene copolymer which is a copolymer of butadiene and styrene, prepared in solution.

A fifth aspect of the invention is the tire (1) according to the third or the fourth aspect, wherein the SiOR function is located at the chain end of the first diene elastomer.

According to a preferred embodiment of the fifth aspect, the first diene elastomer bearing the SiOR function located at the chain end may be prepared according to the procedure described in a patent EP 0 778 311 B1, for example by reaction of the carbanion at the end of the living elastomeric chain with hexamethylcyclotrisiloxane followed by reaction with a proton donor.

A sixth aspect of the invention is the tire (1) according to any one of the third to the fifth aspects, wherein R of the SiOR function is a hydrogen atom.

A seventh aspect of the invention is the tire (1) according to any one of the third to the sixth aspects, wherein the first diene elastomer has a glass transition temperature ($Tg_{DSC}$) of lower than -40°C, (notably between -100°C and -40°C) preferably less than - 45°C (notably between -90°C and -45°C).

An eighth aspect of the invention is the tire (1) according to any one of the third to the seventh aspects, wherein the elastomer matrix comprises 40 to 100 phr, preferably 50 to 100 phr, more preferably 50 to 90 phr of the first diene elastomer, and optionally, 0 to 60 phr, preferably 0 to 50 phr, more preferably 10 to 50 phr of the second diene elastomer.

According to a preferred embodiment of any one of the third to the seventh aspects, the elastomer matrix comprises 20 to 90 phr, preferably 20 to 80 phr, more preferably 40 to 80 phr, of the first diene elastomer, and optionally, 10 to 80 phr, preferably 20 to 80 phr, more preferably 20 to 60 phr, of the second diene elastomer.

A ninth aspect of the invention is the tire (1) according to the eighth aspect, wherein the elastomer matrix comprises 60 to 80 phr of the first diene elastomer, and optionally, 20 to 40 phr of the second diene elastomer.

A tenth aspect of the invention is the tire (1) according to any one of the third to the ninth aspects, wherein the second diene elastomer is selected from the group consisting of polybutadienes (BRs), synthetic polyisoprenes (IRs), natural rubber (NR), butadiene copolymers, isoprene copolymers, and the mixtures thereof.

An eleventh aspect of the invention is the tire (1) according to the tenth aspect, wherein the second diene elastomer is a butadiene rubber.

The rubber composition of the tread (2) of the tire (1) according to the invention is based on a reinforcing filler.

The reinforcing filler may comprise a reinforcing inorganic filler (for instance, silica), carbon black or the mixtures thereof, preferably, the reinforcing filler may predominately comprise the reinforcing inorganic filler, that is, the reinforcing filler may comprise more than 50% by weight of the reinforcing inorganic filler per 100% by weight of the total reinforcing filler. More preferably, the content of reinforcing inorganic filler is more than 60% by weight, still more preferably more than 70% by weight, particularly more than 80% by weight, more particularly more than 90% by weight, per 100% by weight of the total reinforcing filler.

The reinforcing filler in the rubber composition of the tread (2) of the tire (1) according to the invention comprises between 80 and 200 phr of a reinforcing inorganic filler.

A twelfth aspect of the invention is the tire (1) according to any one of the first to the eleventh aspects, wherein the reinforcing filler comprises between 90 and 190 phr, preferably between 100 and 180 phr, more preferably 110 to 170 phr, of the reinforcing inorganic filler.

The expression "reinforcing inorganic filler" should be understood here to mean any inorganic or mineral filler, whatever its color and its origin (natural or synthetic), also referred to as "white filler", "clear filler" or even "non-black filler", in contrast to carbon black, capable of reinforcing by itself alone, without means other than an intermediate coupling agent, a rubber composition intended for the manufacture of tires, in other words capable of replacing, in its reinforcing role, a conventional tire-grade carbon black; such a filler is generally characterized, in a known manner, by the presence of hydroxyl (-OH) groups at its surface.

The physical state under the presence of this filler is unimportant, whether it is in the form of powder, microbeads, granules, beads or any other suitable densified form. Of course, the reinforcing inorganic filler of the mixtures of various reinforcing inorganic fillers, preferably of highly dispersible siliceous and/or aluminous fillers is described hereafter.

Mineral fillers of the siliceous type, preferably silica ($SiO_2$) and/or the aluminous type, preferably alumina ($Al_2O_3$) are suitable in particular as the reinforcing inorganic fillers.

A thirteenth aspect of the invention is the tire (1) according to any one of the first to the twelfth aspects, wherein the reinforcing inorganic filler is silica. The reinforcing inorganic filler may comprise a type of silica or a blend of several silicas. The silica used may be any reinforcing silica known to a person skilled in the art, in particular any precipitated or pyrogenic silica having a BET surface area and a CTAB specific surface area that are both less than 450 $m^2/g$, preferably from 20 to 400 $m^2/g$. Such silica may be covered or not. Mention will be made, as low specific surface silica, of Sidistar R300 from Elkem Silicon Materials. Mention will be made, as highly dispersible precipitated silicas ("HDSs"), for example, of "Ultrasil 7000" and "Ultrasil 7005" from Evonik, "Zeosil 1165 MP", "Zeosil 1135 MP" and "Zeosil 1115 MP" from Rhodia, "Hi-Sil EZ150G" from PPG, "Zeopol 8715", "Zeopol 8745" and "Zeopol 8755" from Huber or the silicas with a high specific surface area as described in a patent application WO 03/016387. Mention will be made, as pyrogenic silicas, for example, of "CAB-O-SIL S-17D" from Cabot, "HDK T40" from Wacker, "Aeroperl 300/30", "Aerosil 380", "Aerosil 150" or "Aerosil 90" from Evonik. Such silica may be covered, for example, "CAB-O-SIL TS-530" covered with

hexamethyldiasilazene or "CAB-O-SIL TS-622" covered with dimethyldichlorosilane from Cabot.

The reinforcing inorganic filler used, particularly in case of that it is silica, has a BET surface area and a CTAB specific surface area that are advantageously 50 to 350 $m^2/g$, more advantageously 100 to 300 $m^2/g$, still more preferably between 150 and 250 $m^2/g$.

The BET surface area is measured according to a known method, that is, by gas adsorption using the Brunauer-Emmett-Teller method described in "The Journal of the American Chemical Society", Vol. 60, page 309, February 1938, and more specifically, in accordance with the French standard NF ISO 9277 of December 1996 (multipoint volumetric method (5 points); where gas: nitrogen, degassing: 1 hour at 160°C, relative pressure range p/po: 0.05 to 0.17). The CTAB specific surface area is determined according to the French standard NF T 45-007 of November 1987 (method B).

A person skilled in the art will understand that a reinforcing filler of another nature, in particular organic nature, such as carbon black, might be used as filler equivalent to the reinforcing inorganic filler described in the present section, provided that this reinforcing filler is covered with an inorganic layer, such as silica, or else comprises, at its surface, functional sites, in particular hydroxyls, requiring the use of a coupling agent in order to form the connection between the filler and the elastomer. By way of example, mention may be made of carbon blacks for tires, such as described in patent applications WO 96/37547 and WO 99/28380.

An fourteenth aspect of the invention is the tire (1) according to any one of the first to the thirteenth aspects, wherein the reinforcing filler further comprises less than 40 phr (for example, between 0.5 and 40 phr), preferably between less than 30 phr (for example, between 1 and 30 phr), more preferably less than 20 phr (for example, between 1.5 and 30 phr), still more preferably less than 10 phr (for example, between 2 and 10 phr), of carbon black.

Within the ranges indicated, there is a benefit of coloring properties (black pigmentation agent) and anti-UV properties of carbon blacks, without furthermore adversely affecting the typical performance provided by the reinforcing inorganic filler, namely low hysteresis (reduced rolling resistance) and high grip on wet, snow-covered or icy ground.

In order to couple the reinforcing inorganic filler to the elastomer matrix, for instance, the diene elastomer, use can be made, in a known manner, of a coupling agent (or bonding agent) intended to provide a satisfactory connection, of chemical and/or physical nature, between the reinforcing inorganic filler (surface of its particles) and the elastomer matrix, for instance, the diene elastomer. This coupling agent is at least bifunctional. Use can be made in particular of at least bifunctional organosilanes or polyorganosiloxanes.

Use can be made in particular of silane polysulphides, referred to as "symmetrical" or "asymmetrical" depending on their particular structure, as described, for example, in applications WO 03/002648, WO 03/002649 and WO 2004/033548.

Particularly suitable silane polysulphides correspond to the following general formula (I):

(I) Z - A - Sx - A - Z ,

in which:

- x is an integer from 2 to 8 (preferably from 2 to 5);
- A is a divalent hydrocarbon radical (preferably, $C_1$-$C_{18}$ alkylene groups or $C_6$-$C_{12}$ arylene groups, more particularly $C_1$-$C_{10}$, in particular $C_1$-$C_4$, alkylenes, especially propylene);
- Z corresponds to one of the formulae below:

[Chem.1]

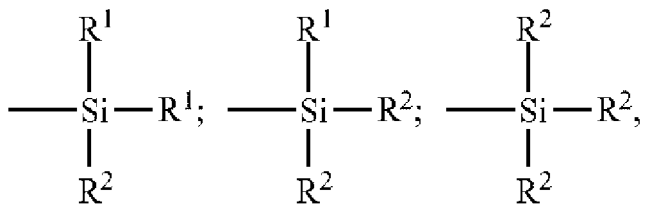

in which:

- the $R^1$ radicals which are unsubstituted or substituted and identical to or different from one another, represent a $C_1$-$C_{18}$ alkyl, $C_5$-$C_{18}$ cycloalkyl or $C_6$-$C_{18}$ aryl group (preferably, $C_1$-$C_6$ alkyl, cyclohexyl or phenyl groups, in particular $C_1$-$C_4$ alkyl groups, more particularly methyl and/or ethyl),
- the $R^2$ radicals which are unsubstituted or substituted and identical to or different from one another, represent a $C_1$-$C_{18}$ alkoxyl or $C_5$-$C_{18}$ cycloalkoxyl group (preferably a group selected from $C_1$-$C_8$ alkoxyls and $C_5$-$C_8$ cycloalkoxyls, more preferably a group selected from $C_1$-$C_4$ alkoxyls, in particular methoxyl and ethoxyl), are

suitable in particular, without limitation of the above definition.

In the case of a mixture of alkoxysilane polysulphides corresponding to the above formula (I), in particular normal commercially available mixtures, the mean value of the "x" indices is a fractional number preferably of between 2 and 5, more preferably of approximately 4. However, the present invention can also advantageously be carried out, for example, with alkoxysilane disulphides (x = 2).

Mention will more particularly be made, as examples of silane polysulphides, of bis(($C_1$-$C_4$)alkoxyl($C_1$-$C_4$)alkylsilyl($C_1$-$C_4$)alkyl)polysulphides (in particular disulphides, trisulphides or tetrasulphides), such as, for example, bis(3-trimethoxysilylpropyl) or bis(3-triethoxysilylpropyl)polysulphides. Use is in particular made, among these compounds, of bis(3-triethoxysilylpropyl)tetrasulphide, abbreviated to TESPT, of formula $[(C_2H_5O)_3Si(CH_2)_3S_2]_2$, or bis(3-triethoxysilylpropyl)disulphide, abbreviated to TESPD, of formula $[(C_2HSO)_3\ Si(CH_2)_3S]_2$. Mention will also be made, as preferred examples, of bis(mono($C_1$-$C_4$ )alkoxyldi($C_1$-$C_4$)alkylsilylpropyl)polysulphides (in particular disulphides, trisulphides or tetrasulphides), more particularly bis(monoethoxydimethylsilylpropyl)tetrasulphide, as described in patent application WO 02/083782 (or US 7 217 751).

Mention will in particular be made, as coupling agent other than alkoxysilane polysulphide, of bifunctional POSs (polyorganosiloxanes) or of hydroxysilane polysulphides ($R^2$ = OH in the above formula (I)), such as described in patent applications WO 02/30939 (or US 6 774 255) and WO 02/31041 (or US 2004/051210), or of silanes or POSs carrying azodicarbonyl functional groups, such as described, for example, in patent applications WO 2006/125532, WO 2006/125533 and WO 2006/125534.

As examples of other silane sulphides, mention will be made, for example, of the silanes bearing at least one thiol (-SH) function (referred to as mercaptosilanes) and/or at least one blocked thiol function, such as described, for example, in patents or patent applications US 6 849 754, WO 99/09036, WO 2006/023815, WO 2007/098080, WO 2008/055986 and WO 2010/072685.

Of course, use could also be made of mixtures of the coupling agents described previously, as described in particular in the aforementioned patent application WO 2006/125534.

According to one preferred embodiment of the invention, the content of coupling agent may be from 0.5 to 15wt% relative to the amount of the reinforcing inorganic filler, particularly silica.

According to one preferred embodiment of the invention, the rubber composition of the tread (2) of the tire (1) according to the invention may be based on less than 30 phr (for example, between 0.1 and 30 phr), preferably less than 25 phr (for example, between 0.5 and 25 phr), more preferably less than 20 phr (for example, between 1 and 20 phr), still more preferably less than 15 phr (for example, between 1.5 and 15 phr) of coupling agent.

The rubber composition of the tread (2) of the tire (1) according to the invention is based on a plasticizing agent.

The plasticizing agent may comprise a liquid plasticizer(s), a hydrocarbon resin(s), or the mixtures thereof.

A fifteenth aspect of the invention is the tire (1) according to any one of the first to the fourteenth aspects, wherein the plasticizing agent comprises 0 to 100 phr, preferably 0 to 90 phr, more preferably 0 to 80 phr, still more preferably 0 to 70 phr, particularly 0 to 60 phr, more particularly 10 to 60 phr, of liquid plasticizer(s) and 5 to 100 phr, preferably 5 to 90 phr, more preferably 5 to 80 phr, still more preferably 5 to 70 phr, particularly 10 to 60 phr, of hydrocarbon resin(s) having a glass transition temperature ($Tg_{DSC}$) above 20°C, preferably above 30°C, more preferably above 40°C.

A sixteenth aspect of the invention is the tire (1) according to the fifteenth aspect, wherein the total content of the liquid plasticizer(s) and the hydrocarbon resin(s) is more than 50 phr, preferably more than 60 phr.

Any extending oil, whether of aromatic or non-aromatic nature, any liquid plasticizing agent known for its plasticizing properties with regard to elastomer matrix(es), for instance, diene elastomers, can be used as the liquid plasticizer(s) in order to soften the matrix by diluting the elastomer and the reinforcing filler. At ambient temperature (20°C) under atmospheric pressure, these plasticizers or these oils, which are more or less viscous, are liquids (that is to say, as a reminder, substances that have the ability to eventually take on the shape of their container), as opposite to plasticizing hydrocarbon resin(s) which are by nature solid at ambient temperature (20°C) under atmospheric pressure.

A seventeenth aspect of the invention is the tire (1) according to the fifteenth aspect, wherein the liquid plasticizer(s) are selected from the group consisting of liquid diene polymers, polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, sulphonate plasticizers and the mixtures thereof, preferably selected from the group consisting of MES oils, TDAE oils, naphthenic oils, vegetable oils and the mixtures thereof, more preferably selected from the group consisting of MES oils, vegetable oils and the mixtures thereof, still more preferably selected from the group consisting of vegetable oils and the mixtures thereof. The vegetable oil(s) may be made of an oil selected from the group consisting of linseed, safflower, soybean, corn, cottonseed, turnip seed, castor, tung, pine, sunflower, palm, olive, coconut, groundnut and grapeseed oils, and the mixtures thereof, particularly sunflower oil(s), more particularly sunflower oil(s) containing over 60%, still more particularly over 70%, advantageously over 80%, more advantageously over 90%, still advantageously 100%, by weight of oleic acid.

The hydrocarbon resin(s) are polymer well known by a person skilled in the art, which are essentially based on carbon and hydrogen, and thus miscible by nature in rubber composition(s), for instance, diene elastomer composition(s). They can be aliphatic or aromatic or also of the aliphatic/aromatic type, that is to say based on aliphatic and/or aromatic monomers. They can be natural or synthetic and may or may not be petroleum-based (if such is the case, also known under the name of petroleum resins). They are preferably exclusively hydrocarbon, that is to say, that they comprise only carbon and hydrogen atoms.

Preferably, the hydrocarbon resins as being "plasticizing" exhibit at least one, more preferably all, of the following characteristics:

- a $Tg_{DSC}$ of above 20°C (for example between 20°C and 100°C), preferably above 30°C (for example between 30°C and 100°C), more preferably above 40°C (for example between 40°C and 100°C);
- a number-average molecular weight (Mn) of between 400 and 2000 g/mol (more preferably between 500 and 1500 g/mol);
- a polydispersity index (PI) of less than 3, more preferably less than 2 (reminder: PI = Mw/Mn with Mw the weight-average molecular weight).

The macrostructure (Mw, Mn and PI) of the hydrocarbon resins is determined by steric exclusion chromatography (SEC): solvent tetrahydrofuran; temperature 35°C; concentration 1 g/l; flow rate 1 ml/min; solution filtered through a filter with a porosity of 0.45$\mu$m before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

An eighteenth aspect of the invention is the tire (1) according to the fifteenth aspect, wherein the hydrocarbon resins are selected from the group consisting of cyclopentadiene (abbreviated to CPD) homopolymer or copolymer resins, dicyclopentadiene (abbreviated to DCPD) homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins and the mixtures thereof. Use is more preferably made, among the above copolymer resins, of those selected from the group consisting of (D)CPD/ vinylaromatic copolymer resins, (D)CPD/terpene copolymer resins, (D)CPD/$C_5$ fraction copolymer resins, (D)CPD/$C_9$ fraction copolymer resins, terpene/vinylaromatic copolymer resins, terpene/phenol copolymer resins, $C_5$ fraction/vinyl-aromatic copolymer resins, $C_9$ fraction/vinylaromatic copolymer resins, and the mixtures thereof.

The term "terpene" combines here, in a known way, the $\alpha$-pinene, $\beta$-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, $\alpha$-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a $C_9$ fraction (or more generally from a $C_8$ to $C_{10}$ fraction) are suitable, for example, as vinylaromatic monomer. Preferably, the vinylaromatic compound is styrene or a vinylaromatic monomer resulting from a $C_9$ fraction (or more generally from a $C_8$ to $C_{10}$ fraction). Preferably, the vinylaromatic compound is the minor monomer, expressed as molar fraction, in the copolymer under consideration.

The preferred resins above are well known to a person skilled in the art and are commercially available, for example:

- polylimonene resins: by DRT under the name "Dercolyte L120" (Mn=625 g/mol; Mw=1010 g/mol; PI=1.6; $Tg_{DSC}$=72°C) or by Arizona Chemical Company under the name "Sylvagum TR7125C" (Mn=630 g/mol; Mw=950 g/mol; PI=1.5; $Tg_{DSC}$=70°C);
- $C_5$ fraction/vinylaromatic, notably $C_5$ fraction/styrene or $C_5$ fraction/$C_9$ fraction, copolymer resins: by Neville Chemical Company under the names "Super Nevtac 78", "Super Nevtac 85" or "Super Nevtac 99", by Goodyear Chemicals under the name "Wingtack Extra", by Kolon under the names "Hikorez T1095" and "Hikorez T1100", or by Exxon under the names "Escorez 2101" and "ECR 373";
- limonene/styrene copolymer resins: by DRT under the name "Dercolyte TS 105" or by Arizona Chemical Company under the names "ZT115LT" and "ZT5100".

Mention may also be made, as examples of other preferred resins, of phenol-modified $\alpha$-methylstirene resins. It should be remembered that, in order to characterize these phenol-modified resins, use is made, in a known way, of a number referred to as "hydroxyl number" (measured according to Standard ISO 4326 and expressed in mg KOH/g). $\alpha$-Methylstirene resins, in particular those modified with phenol, are well known to a person skilled in the art and are available commercially, for example sold by Arizona Chemical Company under the names "Sylvares SA 100" (Mn=660 g/mol; PI=1.5; $Tg_{DSC}$=53°C); "Sylvares SA 120" (Mn=1030 g/mol; PI=1.9; $Tg_{DSC}$=64°C); "Sylvares 540" (Mn=620 g/mol;

PI=1.3; $Tg_{DSC}$=36°C; hydroxyl number=56 mg KOH/ g); and "Sylvares 600" (Mn=850 g/mol; PI=1.4; $Tg_{DSC}$=50°C; hydroxyl number=31 mg KOH/g).

The rubber composition of the tread (2) of the tire (1) according to the invention is based on between 1 and 150 phr of particles having a particle size of between 100 and 10 mesh.

Regarding the content of the particles, below the indicated minimum, the targeted technical effect is insufficient. Wherein the indicated maximum, there is a risk of worsening processability and/or wear performance of the tire (1).

A nineteenth aspect of the invention is the tire (1) according to any one of the first to the eighteenth aspects, wherein the rubber composition is based on between 5 and 100 phr, preferably between 10 and 50 phr, more preferably between 15 and 45 phr, of the particles, still more preferably between 20 and 40 phr, of the particles.

As well known by the skilled person, "Mesh" is defined as the number of holes per square inch of a screen used for sorting particles into different sizes. The higher the number of holes in the screen is, the smaller the hole size is. The particles having the particle size of between 100 and 10 mesh can pass through a screen having 10 holes per square inch of screen, but cannot pass through a screen having 100 holes per square inch of screen.

Use may simply and preferably be made of an analysis of the particle size by mechanical sieving; the operation consists of sieving a defined amount of sample (for example 200 g) on a vibrating table for 30 min with different sieve diameters with meshes in accordance with ASTM E-10.

Regarding the particle size, below the indicated minimum, the targeted technical effect (to improve the grip on snowy ground with an effective roughness by virtue of cavities which the particles release from the rubber composition when the tire of the invention is running and/or the tread of tire is worn) is insufficient. Whereas, above the maximum indicated, various disadvantages emerge, in particular when the rubber composition is used as tread: apart from a possible aesthetic loss and a risk of cohesion loss during rolling of relatively large elements of the tread pattern, it being found that the grip performance on snow and/or dry may be damaged.

A twentieth aspect of the invention is the tire (1) according to any one of the first to the nineteenth aspects, wherein the particles have the particle size of between 50 and 12 mesh, preferably between 40 and 14 mesh, more preferably between 30 and 16 mesh, still more preferably between 35 and 18 mesh.

A twenty first aspect of the invention is the tire (1) according to any one of the first to the twentieth aspects, wherein the particles are made of particles selected from the group consisting of potassium tetraborate, sodium tetraborate calcium tetraborate, potassium chloride, sodium chloride, zirconia bead, alkali feldspar, kureha microsphere, silica sand, porous silica bead, cellulose powder, porous cellulose bead, walnut hull, apricot kernel, peach kernel, corn ear core, oyster shells, chitin, polyvinyl alcohol powder, polyethylene resin, crumb rubber and the mixtures thereof, preferably selected from the group consisting of sodium chloride, porous cellulose bead, crumb rubber and the mixtures thereof.

A twenty second aspect the invention is the tire (1) according to the twenty first aspect, wherein the particles are crumb rubber particles.

A twenty third aspect the invention is the tire (1) according to the twenty second aspect, wherein the crumb rubber particles are mechanically processed.

A twenty fourth aspect the invention is the tire (1) according to the twenty second or the twenty third aspect, wherein the crumb rubber particles are generated from scrap tires.

The crumb rubber particles are defined as particles obtained by reducing scrap tire(s) or other rubber(s) into granules with reinforcing materials such as steel(s) or fiber(s) removed along with any other contaminants such as dust(s), glass(es), or rock(s). "Rubber Chemistry and Technology" discloses many methods of grinding vulcanized or crosslinked rubber(s) into crumb rubber particles. For example, the crumb rubber particles may be ground using a mechanical grinding process or a cryogenic process. In both processes the steel components are removed using a magnetic separator and the fiber components are separated by air classifiers or other separation equipment. The mechanical grinding process uses a variety of grinding techniques, such as cracker mills, granulators, etc. to mechanically break down the rubber into small particles. In the cryogenic process, shredded rubber is frozen at an extremely low temperature then shattered into small particles. Particular embodiments of the present invention use crumb rubber particles produced through a mechanical grinding process. Other embodiments use crumb rubber particles produced using a cryogenic process. Many crumb rubbers are commercially available and for example, a suitable crumb rubber for use in the present invention is available under the trade name Cut ground rubber chip (Particle size: between 35 mesh and 18 mesh) from Global Corporation. Cut ground rubber chip from Global Corporation is produced using a mechanical grinding process.

The rubber compositions of the treads (2) of the tires (1) according to the invention may be based on all or a portion(s) of the usual additives generally used in the elastomer compositions intended for the manufacture of treads for tires, in particular for snow tires or winter tires, such as, for example, protection agents, such as antiozone waxes, chemical antiozonants, antioxidants, reinforcing resins, methylene acceptors (for example phenolic novolak resin) or methylene donors (for example HMT or H3M), a crosslinking system based either on sulphur or on donors of sulphur and/or per oxide and/or bismaleimides, vulcanization accelerators, or vulcanization activators.

These compositions can also be based on coupling activators when a coupling agent is used, agents for covering

the reinforcing inorganic filler or more generally processing aids capable, in a known way, by virtue of an improvement in the dispersion of the filler in the rubber matrix and of a lowering of the viscosity of the compositions, of improving their property of processing in the raw state; these agents are, for example, hydrolysable silanes, such as alkylalkoxysilanes, polyols, polyethers, amines, or hydroxylated or hydrolysable polyorganosiloxanes.

The rubber compositions of the treads (2) of the tires (1) according to the invention may be manufactured in appropriate mixers using two successive preparation phases well known to a person skilled in the art: a first phase of thermomechanical working or kneading (referred to as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40°C and 100°C, finishing phase during which the crosslinking or vulcanization system is incorporated.

A process which can be used for the manufacture of such compositions comprises, for example and preferably, the following steps:

- incorporating in the elastomer matrix, for instance, the diene elastomer(s), in a mixer, the reinforcing filler, the plasticizing agent, during a first stage ("non productive" stage) everything being kneaded thermomechanically (for example in one or more steps) until a maximum temperature of between 110°C and 190°C is reached;
- cooling the combined mixture to a temperature of less than 100°C;
- subsequently incorporating, during a second stage (referred to as a "productive" stage), a crosslinking system;
- kneading everything up to a maximum temperature of less than 110°C;
- extruding or calendering the rubber composition thus obtained, in particular in the form of a tire tread.

By way of example, the first (non-productive) phase is carried out in a single thermomechanical stage during which all the necessary constituents are introduced into an appropriate mixer, such as a standard internal mixer, followed, in a second step, for example after kneading for 1 to 2 minutes, by the other additives, optional additional filler-covering agents or processing aids, with the exception of the crosslinking system. The total kneading time, in this non-productive phase, is preferably between 1 and 15 min.

After cooling the mixture thus obtained, the crosslinking system is then incorporated at low temperature (for example, between 40°C and 100°C), generally in an external mixer, such as an open mill; the combined mixture is then mixed (the second (productive) phase) for a few minutes, for example between 2 and 15 min.

The crosslinking system proper is preferably based on sulphur and on a primary vulcanization accelerator, in particular on an accelerator of sulphenamide type. Added to this vulcanization system are various known secondary accelerators or vulcanization activators, such as zinc oxide, stearic acid, guanidine derivatives (in particular diphenylguanidine), and the like, incorporated during the first non-productive phase and/or during the productive phase. The content of sulphur is preferably between 0.5 and 3.0 phr, and that of the primary accelerator is preferably between 0.5 and 5.0 phr.

Use may be made, as accelerator (primary or secondary) of any compound capable of acting as accelerator of the vulcanization of elastomer matrix, for instance, diene elastomers, in the presence of sulphur, in particular accelerators of the thiazoles type and their derivatives, accelerators of thiurams types, or zinc dithiocar bamates. These accelerators are more preferably selected from the group consisting of 2-mercaptobenzothiazyl disulphide (abbreviated to "MBTS"), N-cyclohexyl-2-benzothiazole sulphenamide (abbreviated to "CBS"), N,N-dicyclohexyl-2 benzothiazolesulphenamide ("DCBS"), N-ter't-butyl-2-ben zothiazolesulphenamide ("TBBS"), N-tert-butyl-2 benzothiazolesulphenimide ("TBSI"), zinc dibenzyldithio-carbamate ("ZBEC"), Tetrabenzylthiuram disulfide ("TBZTD") and the mixtures thereof.

The final composition thus obtained is subsequently calendered, for example in the form of a sheet or of a plaque, in particular for laboratory characterization, or else extruded in the form of a rubber profiled element which can be used directly as snow tire tread(s) or winter tire tread(s).

The vulcanization (or curing) is carried out in a known way at a temperature generally of between 110°C and 190°C for a sufficient time which can vary, for example, between 5 and 90 min depending in particular on the curing temperature, the vulcanization system adopted and the vulcanization kinetics of the composition under consideration.

The rubber compositions of the treads (2) of the tires (1) according to the invention can constitute all or a portion only of the tread of the tire in accordance with the invention, in the case of a tread of composite type formed from several rubber compositions of different formulations.

The invention relates to the rubber compositions and to the treads (2) described above, both in the raw state (i.e., before curing) and in the cured state (i.e., after crosslinking or vulcanization).

The tread (2) of the tire (1) according to the invention has a sipe density (SD) defined that corresponds to

[Math.1]

$$SD = \frac{\sum_i li}{P * Wm}$$

the sipe density being less than 60 μm/mm2.

Regarding the sipe density, above the indicated maximum, the grip performance of the tire (1) on dry ground may be lower.

According to a preferred embodiment of any one of the first to the twenty fourth aspects, the sipe density may be less than 55μm/mm2, preferably less than 50μm/mm2, more preferably less than 45μm/mm2, still more preferably less than 40μm/mm2, particularly less than 35μm/mm2, more particularly less than 30μm/mm2.

A twenty fifth aspect the invention is the tire (1) according to any one of the first to the twenty fourth aspects, wherein the sipe density (SD) is between 0 and 60μm/mm2, in order to get good grip performance of the tire (1) on dry ground, and improve the grip performance on snow by the combination of the sipe and the rubber composition of the tread of the tire (1) according to the invention.

According to a preferred embodiment of the twenty fifth aspect, the sipe density may be between 10 and 60μm/mm2, preferably between 15 and 60μm/mm2, more preferably between 20 and 60μm/mm2, still more preferably between 25 and 60μm/mm2.

According to another preferred embodiment of the twenty fifth aspect, the sipe density may be between 0 and 55μm/mm2, preferably between 10 and 55μm/mm2, more preferably between 15 and 55μm/mm2, still preferably between 20 and 55μm/mm 2, particularly between 25 and 55μm/mm2.

According to another preferred embodiment of the twenty fifth aspect, the sipe density may be between 0 and 50μm/mm2, preferably between 10 and 50μm/mm2, more preferably between 15 and 50μm/mm2, still preferably between 20 and 50μm/mm 2, particularly between 25 and 50μm/mm2.

According to another preferred embodiment of the twenty fifth aspect, the sipe density may be between 0 and 45μm/mm2, preferably between 10 and 45μm/mm2, more preferably between 15 and 45μm/mm2, still preferably between 20 and 45μm/mm 2, particularly between 25 and 45μm/mm2.

According to another preferred embodiment of the twenty fifth aspect, the sipe density may be between 0 and 40μm/mm2, preferably between 10 and 40μm/mm2, more preferably between 15 and 40μm/mm2, still preferably between 20 and 40μm/mm 2, particularly between 25 and 40μm/mm2.

According to another preferred embodiment of the twenty fifth aspect, the sipe density may be between 0 and 35μm/mm2, preferably between 10 and 35μm/mm2, more preferably between 15 and 35μm/mm2, still preferably between 20 and 35μm/mm 2, particularly between 25 and 35μm/mm2.

According to another preferred embodiment of the twenty fifth aspect, the sipe density may be between 0 and 30μm/mm2, preferably between 10 and 30μm/mm2, more preferably between 15 and 30μm/mm2, still preferably between 20 and 30μm/mm 2, particularly between 25 and 30μm/mm2.

## Brief Description of Drawings

Further features and advantages of the invention will become apparent from the following description, given by way of nonlimiting example, with reference to the attached drawings (in particular not to a specific scale) in which:

[fig.1]FIG. 1 schematically represents a partial view of a tread (2) of a tire (1) in accordance with the invention;
[fig.2]FIG. 2 illustrates how the axial edge of a tread (2) is determined according to a first determination method;
[fig.3]FIG. 3 illustrates how the axial edge of a tread (2) is determined according to a second determination method;

In the description that is to follow, elements that are identical or similar will be denoted by identical references.

FIG. 1 partially depicts the tread surface (3) of a tread (2) of the tire (1) of dimension 205/55R16.

The tread (2) comprises a sequence of n basic patterns (41, 42) arranged in the circumferential direction X, where n is a natural integer greater than or equal to 1. To make FIG. 1 easier to understand, only a first basic pattern (41) and a second basic pattern (42) have been represented.

Each basic pattern (41, 42) extends in the circumferential direction X at a determined pitch P.

The pitch of the first basic pattern (41) here is identical to the pitch of the second basic pattern (42). As an alternative, the pitches of the basic patterns can be different. The pitch of the first basic pattern may be between 15.0 and 50.0 mm, preferably 20.0 to 45.0 mm.

Each basic pattern (41, 42) extends over at least 80% of the width W of the tread (2). In the example of FIG.

1, the width Wm of the basic pattern (41, 42) here is substantially identical to about 93% of the width W of the tread (2), and wherein here in particular, Wm = 190.0 mm, and W=205.0 mm.

Each basic pattern (41, 42) here comprises several raised elements (5i), and is provided with i sipes (6i) opening onto the tread surface (3), wherein i is a natural integer greater, and wherein in particular, i=11~16, and 21~26.

The i sipes (6i) are distributed across the various raised elements (5i).

For each i sipe (6i), it is possible to determine a sipe length $l_i$ corresponding to the length of the line of the sipe on the tread surface (3).

An angle $\alpha$i (alpha i) is also determined for each i sipe, wherein |$\alpha$i| ≦ 45°wherein here in particular, |$\alpha$i| = 20°. The angleai corresponds to the angle formed by the i$^{th}$ sipe (6i) with the axel direction Y.

A twenty sixth aspect of the invention is the tire (1) according to any one of the first to the twenty fifth aspects, wherein an angleai (alpha i) is the positive or negative angle formed on the tread surface (3) by the i$^{th}$ sipe (6) with the axel direction, wherein |$\alpha$i| ≦ 45°(degrees), preferably |$\alpha$i| ≦ 35°(degrees), more preferably |$\alpha$i| ≦ 25°(degrees).

The angle $\alpha_i$ (alpha i) is also determined for each i sipe, |$\alpha$i| = 20°in FIG. 1. The angle$\alpha_i$ corresponds to the angle formed by the ith sipe (6i) with the axel direction Y.

The way in which the angles of the sipes are defined is explained later on in the description.

The sipe angle is said to be positive with respect to the axel direction Y if the rotation that brings said axel direction Y onto the line of the sipe on the tread surface (3) is in the counterclockwise direction.

Conversely, the sipe angle is said to be negative with respect to the axel direction Y if the rotation that brings said axel direction Y onto the line of the sipe on the tread surface (3) is in the clockwise direction.

For i=11, 13, 15, 21, 23, and 25, the elements (5i) have sipes (6i) that form a negative angle with the axel direction Y.

For i=12, 14, 16, 22, 24, and 26, the elements (5i) have sipes (6i) that form a positive angle with the axel direction Y.

The sipes belonging to one and the same raised element are oriented here with the same angle.

As a variant, it is possible to have sipes of different orientation in one and the same raised element.

A sipe density (SD) is also defined for the basic pattern (41).

The sipe density (SD) corresponds to the equation.

[Math.1]

$$SD = \frac{\sum_{i} li}{P * Wm}$$

In this equation it is reminded that i is the number of sipes (6i) in the basic pattern (41), $l_i$ is the length of the ith sipe (6i) on the tread surface (3), P is the pitch of the basic pattern and Wm is the width of the basic patterns, and wherein here in particular, wherein in particular, i = 11~16, each of $l_i$ = 26.6 mm, P = 30.0 mm, Wm = 190.0 mm, and SD = 28 $\mu$m/mm$^2$.

In the FIG.1, the raised elements (51i, 52i) are delimited by grooves (7i, 8i), and the sipes (61i, 62i) are both side open sipes which are distributed across the raised element elements (51i, 52i), wherein in particular, i = 1~6, the circumferential length of raised elements (51i, 52i): 27.0 mm, the axial raised elements (51i, 52i): 25.0 mm, the width of grooves (7i) in the axial direction of the tire: 8.0 mm, the width of groove (8i) in the circumferential direction of the tire: 3.0 mm, the depth of grooves (7i, 8i) in the radial direction of the tire: 9.0 mm, the width of sipes (61i, 62i): 0.6 mm, that is, the width of sipes (61i, 62i) in the circumferential direction of the tire: 0.6 mm/cos(|$\alpha$i| = 20°), the depth of sipes (61i, 62i) in the radial direction of the tire: 9.0 mm.

The width W of the tread (2) corresponds to the distance between a first axial edge (91) and a second axial edge (92) of the tread (2).

The way in which the width W of a tread (2) is determined is illustrated in FIGs. 2 and 3, each of which show the partial profile of a tread (2) and the part of a sidewall (101) adjacent to it. In certain designs of tire, the transition from the tread (2) to the sidewalls is very clear cut, as in the case represented in FIG. 2, and the first axial edge (91) and the second axial edge (not represented) can be determined intuitively.

However, there are tire designs in which the transition between the tread (2) and the sidewalls is continuous. An example is represented in FIG. 3.

In this FIG. 3, the first axial edge (91) and the second axial edge of the tread (2) are determined as follows. On a radial section through the tire (1), the tangent to the tread surface (3) at every point on said tread surface (3) in the region of transition toward the sidewall is plotted. The first axial edge (91) is the point at which the angle $\beta$ (beta) between said tangent and an axial direction is equal to 30°. When there are a number of points for which the angle $\beta$ between said tangent and an axial direction is equal to 30°, the point adopted is the radially outermost one. The same procedure

is followed in order to determine the second axial edge of the tread (2).

A twenty seventh aspect of the invention is the tire (1) according to any one of the first to the twenty sixth aspects, wherein the tire (1) is a snow tire.

The invention is further illustrated by the following non-limiting examples.

**Examples**

In the test, two rubber compositions (C-1 and C-2) are compared. The two rubber compositions are based on a diene elastomer (SBR bearing a SiOR function) reinforced with a blend of silica (as inorganic filler) and carbon black, and a plasticizing agent with/without crumb rubber particles (as particles). The formulations of the three rubber compositions are given at Table 1 with the content of the various products expressed in phr.

- C-1: without the particles;
- C-2: with the particles.

Each rubber composition was produced as follows: The reinforcing filler, its associated coupling agent, the plasticizing agent, the particles, the elastomer matrix and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasts in total approximately 3 to 4 minutes, until a maximum "dropping" temperature of 165°C was reached. The mixture thus obtained was recovered and cooled and then sulphur and an accelerator of sulphenamide type were incorporated on an external mixer (homofinisher) at 20 to 30°C, everything being mixed (productive phase) for an appropriate time (for example, between 5 and 12 min).

The rubber compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting and/or assembling to the desired dimensions, for example as tire semi-finished products, in particular as tire treads.

In order to confirm the effect of the present invention, six tires (denoted T-1 and T-2 references), T-3 (a comparative example), T-4, T-5 (examples according to the invention), and T-6 (another comparative example) having treads comprising the above rubber compositions (C-1 and C-2). T-1 and T-4 have a tread shown in FIG. 1, each of raised elements in the tread has one sipe, and the sipe density is 28 $\mu m/mm^2$. Each of raised elements in the others (T-2, T-3, T-5 and T-6) has one or two more sipe(s) than that in T-1 and T-4, and the sipe density is 56 or 84 $\mu m/mm^2$;

- T-1: Rubber composition C-1, Sipe density: 28 $\mu m/mm^2$ (a reference);
- T-2: Rubber composition C-1, Sipe density: 56 $\mu m/mm^2$ (another reference);
- T-3: Rubber composition C-1, Sipe density: 84 $\mu m/mm^2$ (a comparative example);
- T-4: Rubber composition C-2, Sipe density: 28 $\mu m/mm^2$ (an example according to the invention);
- T-5: Rubber composition C-2, Sipe density: 56 $\mu m/mm^2$ (an example according to the invention);
- T-6: Rubber composition C-2, Sipe density: 84 $\mu m/mm^2$ (another comparative example).

The additional sipe(s) are arranged at equal interval on each of raised elements of the tire tread (T-2, T-3, T-5 and T-6), and the angle formed by the additional sipe(s) with the axel direction Y is 20°or -20°.

These tires, for radial carcass passenger vehicle winter tires, having a size of 205/55R16, were conventionally manufactured and in all respects identical apart from the rubber compositions of treads.

All the tires were fitted to the front and rear a motor vehicle, under nominal tire inflation pressure, and were first of all subjected to rolling on a circuit [of about 100 km], on a dry ground surface for running in and the beginning of wear.

A 1,400 cc passenger car provided on all the four wheels with the same kind of test tires under 220 kPa of tire inflation pressure mounted onto 6.5Jx16 rim was run on a snow covered road at a temperature of -10 °C, the deceleration from 50 to 5 km/h during sudden longitudinal braking while anti-lock braking system (ABS) activated was measured. The above snow tests were conducted on a hard pack snow with a CTI penetrometer reading of about 90 in accordance with Standard ASTM F1805.

Moreover, the above passenger car with the above test tires under the above tire inflation pressure mounted onto the above rim was run on a dry road at an air temperature of 25 °C, and the braking distance from 100 to 0 km/h during sudden longitudinal braking while anti-lock braking system (ABS) activated was measured.

The results of the running tests on snow and dry roads are reported in Table 2, in relative units, the base 100 being selected for the reference tire T-1 (it should be remembered that a value of greater than 100 indicates an improved performance).

It is noted in Table 2 that the snow braking performance of the tire according to the invention (T-4) is significantly

better than that of the reference tire (T-1) with same sipe density (28μm/mm$^2$), while T-4 equivalently performs on the dry braking as T-1.

Similarly, Table 2 indicates that the other tire according to the invention (T-5) improves the grip performance on snow in comparison to that of the other reference tire (T-2) with same sipe density (56μm/mm$^2$), while the T-5 maintains equivalent dry braking performance as T-2.

Moreover, as shown in this Table 2, the mean of these grip performances of the tires according to the invention (T-4, T-5) is better than that of the others (T-1, T-2, T-3 and T-6).

In conclusion, the treads of the tires in accordance with the invention allow an improvement braking performance on snow without deterioration of a grip performance on dry ground.

[Table 1]

| | C-1 | C-2 |
|---|---|---|
| BR (1) | 40 | 40 |
| SBR (2) | 60 | 60 |
| Carbon black (3) | 4 | 4 |
| Silica (4) | 115 | 115 |
| Coupling agent (5) | 9.2 | 9.2 |
| Liquid plasticizer (6) | 40 | 40 |
| Hydrocarbon resin (7) | 30 | 30 |
| Particles (8) | | 26 |
| ZnO | 1.4 | 1.4 |
| Stearic acid | 3 | 3 |
| Antiozone wax | 1.9 | 1.9 |
| Antioxidant (9) | 2.7 | 2.7 |
| DPG (10) | 2.1 | 2.1 |
| Sulphur | 1.4 | 1.4 |
| Accelerator (11) | 1.6 | 1.6 |

(1) BR: BR with 0.3% of 1,2 vinyl; 2.7% of trans; 97% of cis-1,4 ($Tg_{DSC}$ = -105°C);
(2) SBR1: SBR with 27% of styrene unit and 24% of unit 1,2 of the butadiene part ($Tg_{DSC}$ = -48°C) bearing a SiOR function, R being hydrogen, the SiOR being dimethylsilanol function at the end of the elastomer chain, the SBR prepared according to a process described in a patent EP 0 778 311 B1;
(3) Carbon black: Carbon black (ASTM grade N234 from Cabot);
(4) Silica: Silica ("Zeosil 1165MP" from Rhodia (CTAB, BET: about 160 m$^2$/g));
(5) Coupling agent TESPT ("Si69" from Evonik);
(6) Oleic sunflower oil ("Agripure 80" from Cargill, Weight percent oleic acid: 100%);
(7) Hydrocarbon resin $C_5/C_9$ type ("Escorez ECR-373" from Exxon, $Tg_{DSC}$= 44°C);
(8) Crumb rubber particles: Cut ground rubber chip, Particle size: between 35 mesh and 18 mesh from Global Corporation;
(9) N-(1,3-dimethylbutyl)-N-phenyl-para-phenylenediamine ("Santoflex 6-PPD" from Flexsys);
(10) Diphenylguanidine ("Perkacit DPG" from Flexsys);
(11) N-dicyclohexyl-2-benzothiazolesulphenamide ("Santocure CBS" from Flexsys).

[Table 2]

| | T-1 | T-2 | T-3 | T-4 | T-5 | T-6 |
|---|---|---|---|---|---|---|
| Rubber composition | C-1 | C-1 | C-1 | C-2 | C-2 | C-2 |
| Sipe ratio ($\mu$m/mm$^2$) | 28 | 56 | 84 | 28 | 56 | 84 |
| Snow braking | 100 | 119 | 128 | 124 | 125 | 126 |
| Dry braking | 100 | 95 | 90 | 100 | 95 | 90 |
| Mean | 100 | 107 | 109 | 112 | 110 | 108 |

**Claims**

1. A tire (1) having a tread (2) comprising a rubber composition based on at least:

- an elastomer matrix;
- a reinforcing filler comprising between 80 and 200 phr of a reinforcing inorganic filler;
- a plasticizing agent; and
- between 1 and 150 phr of particles having a particle size of between 100 and 10 mesh;

wherein the tread (2) comprises:

a tread surface (3) intended to be in contact with the ground when the tire (1) is running;
a sequence of basic pattern(s) (4) circumferentially arranged, wherein each basic pattern (4) has a width (Wm) axially extending over at least 80% of the width (W) of the tread (2), each basic pattern has a pitch (P) circumferentially extending, and each basic pattern (4) comprises a plurality of raised elements (5), one or more of which are provided with sipes (6) opening onto the tread surface (3), wherein each sipe (6) has a width of less than 1 mm and a depth of at least 3 mm;
wherein the tread (2) has a sipe density (SD) defined as

[Math. 1]

$$SD = \frac{\sum_i li}{P * Wm}$$

the sipe density (SD) being less than 60 $\mu$ m/mm$^2$;
where i is the number of sipe(s) (6) in the pattern, $l_i$ is the length of the $i^{th}$ sipe on the tread surface (3), P is the pitch of the basic pattern, Wm is the width of the basic pattern(s) (4).

2. The tire (1) according to Claim 1, wherein the elastomer matrix comprises at least a diene elastomer selected from the group consisting of polybutadienes, synthetic polyisoprenes, natural rubber, butadiene copolymers, isoprene copolymers, and the mixtures thereof.

3. The tire (1) according to Claim 1, wherein the elastomer matrix comprises 20 to 100 phr of a first diene elastomer bearing at least one SiOR function, R being hydrogen atom or a hydrocarbon radical, and optionally, 0 to 80 phr of a second diene elastomer which is different from the first diene elastomer, preferably wherein the first diene elastomer is a styrene-butadiene copolymer.

4. The tire (1) according to Claim 3, wherein the SiOR function is located at the chain end of the first diene elastomer.

5. The tire (1) according to Claim 3 or Claim 4, wherein the first diene elastomer has a glass transition temperature of lower than -40°C.

6. The tire (1) according to any one of Claims 1 to 5, wherein the reinforcing inorganic filler is silica.

7. The tire (1) according to any one of Claims 1 to 6, wherein the reinforcing filler further comprises less than 40 phr of carbon black.

8. The tire (1) according to any one of Claims 1 to 7, wherein the plasticizing agent comprises 0 to 100 phr of liquid plasticizer(s) and 5 to 100 phr of hydrocarbon resin(s) having a glass transition temperature above 20°C, preferably wherein the total content of the liquid plasticizer(s) and the hydrocarbon resin(s) is more than 50 phr.

**9.** The tire (1) according to Claim 8, wherein the liquid plasticizer(s) are selected from the group consisting of liquid diene polymers, polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, phosphate plasticizers, sulphonate plasticizers and the mixtures thereof.

**10.** The tire (1) according to Claim 8, wherein the hydrocarbon resin(s) are selected from the group consisting of cyclopentadiene homopolymer or copolymer resins, dicyclopentadiene homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins, and the mixtures thereof.

**11.** The tire (1) according to any one of Claims 1 to 10, wherein the particles are made of particles selected from the group consisting of potassium tetraborate, sodium tetraborate calcium tetraborate, potassium chloride, sodium chloride, zirconia bead, alkali feldspar, kureha microsphere, silica sand, porous silica bead, cellulose powder, porous cellulose bead, walnut hull, oyster shells, chitin, polyvinyl alcohol powder, polyethylene resin, crumb rubber and the mixtures thereof.

**12.** The tire (1) according to Claim 11, wherein the particles are crumb rubber particles, preferably wherein the crumb rubber particles are mechanically processed.

**13.** The tire (1) according to Claim 12, wherein the crumb rubber particles are generated from scrap tires.

**14.** The tire (1) according to any one of Claims 1 to 13, wherein an angle $\alpha_i$ (alpha i) is the positive or negative angle formed on the tread surface (3) by the $i^{th}$ sipe (6) with the axel direction, wherein $|\alpha i| \leqq 45°$.

**15.** The tire (1) according to any one of Claims 1 to 14, wherein the tire (1) is a snow tire.

## Patentansprüche

**1.** Reifen (1), der eine Lauffläche (2) aufweist, umfassend eine Gummizusammensetzung, die wenigstens basiert auf:

- einer Elastomermatrix:
- einem Verstärkungsfüllstoff, umfassend zwischen 80 und 200 phr eines anorganischen Verstärkungsfüllstoffs; und
- einen Weichmacher; und
- zwischen 1 und 150 phr Partikeln mit einer Partikelgröße zwischen 100 und 10 Mesh;

wobei die Lauffläche (2) umfasst:

eine Laufoberfläche (3), die dazu bestimmt ist, mit dem Boden in Kontakt zu kommen, wenn der Reifen (1) läuft; eine Sequenz von (einem) Basismuster(n) (4), die umlaufend angeordnet ist, wobei jedes Basismuster (4) eine Breite (Wm) aufweist, die sich axial über wenigstens 80 % der Breite (W) des Reifens (2) erstreckt, wobei jedes Basismuster eine Rillensteigung (P) aufweist, die sich umfangsgemäß erstreckt, und jedes Basismuster (4) eine Vielzahl von erhöhten Elementen (5) aufweist, von denen eines oder mehrere mit Lamellen (6) bereitgestellt ist / sind, die sich auf der Laufflächenoberfläche (3) erstrecken, wobei jede Lamelle (6) eine Breite von weniger als 1 mm und eine Tiefe von wenigstens 3 mm aufweist;
wobei die Lauffläche (2) eine Lamellendichte (SD) aufweist, die definiert ist als

[Math. 1]

$$SD \quad \frac{\sum_{i} li}{P * Wm}$$

wobei die Lamellendichte (SD) geringer ist als 60 *y* $m/mm^2$;
wobei i die Anzahl von Lamellen (6) in dem Muster ist, die Länge der $i^{ten}$ Lamelle auf der Laufoberfläche (3) ist, P die Rillensteigung des Basismusters ist, Wm die Breite des / der Basismuster(s) (4) ist.

**2.** Reifen (1) gemäß Anspruch 1, wobei die Elastomermatrix wenigstens ein Dienelastomer umfasst, das aus der Gruppe ausgewählt ist, bestehend aus Polybutadienen, synthetischen Polyisoprenen, Naturgummi, Butadien-Kopolymeren, Isopren-Kopolymeren und den Mischungen davon.

**3.** Reifen (1) gemäß Anspruch 1, wobei die Elastomermatrix 20 bis 100 phr eines ersten Dienelastomers, das wenigstens eine SiOR-Funktion trägt, wobei R ein Wasserstoffatom oder ein Kohlenwasserstoff-Radikal ist, und optional 0 bis 80 phr eines zweiten Dienelastomers, das von dem ersten Dienelastomer unterschiedlich ist, umfasst, wobei das erste Dienelastomer bevorzugt ein Styrol-Butadien-Kopolymer ist.

**4.** Reifen (1) gemäß Anspruch 3, wobei die SiOR-Funktion am Ende der Kette des ersten Dienelastomers angeordnet ist.

**5.** Reifen (1) gemäß Anspruch 3 oder Anspruch 4, wobei das erste Dienelastomer eine Glas-Übergangstemperatur von weniger als -40°C aufweist.

**6.** Reifen (1) gemäß irgendeinem der Ansprüche 1 bis 5, wobei der anorganische Verstärkungsfüllstoff Kieselerde ist.

**7.** Reifen (1) gemäß irgendeinem der Ansprüche 1 bis 6, wobei der Verstärkungsfüllstoff weiterhin weniger als 40 phr des Kohlenstoffschwarzes umfasst.

**8.** Reifen (1) gemäß irgendeinem der Ansprüche 1 bis 7, wobei der Weichmacher 0 bis 100 phr an flüssigem (flüssigen) Weichmacher(n) und 5 bis 100 phr an Kohlenwasserstoff-Harz(en) mit einer Glas-Übergangstemperatur oberhalb von 20°C umfasst, wobei der Gesamtgehalt des (der) flüssigen Weichmacher(s) und des (der) Kohlenwasserstoffharz(e) mehr als 50 phr beträgt.

**9.** Reifen (1) gemäß Anspruch 8, wobei der (die) flüssige(n) Weichmacher aus der Gruppe ausgewählt ist (sind), bestehend aus flüssigen Dien-Polymeren, aus Polyolefinölen, naphtenischen Ölen, Paraffinölen, Aromatenextrakt aus Destillat-Ölen (DAE-Ölen), Mediumextrakten aus Lösungsmittel-Ölen (MES-Ölen), Verarbeiteten Aromatenextrakten aus Destillatölen (TDAE-Ölen), Aromatenextrakten aus Rückstandsölen (RAE-Ölen), Aromatenextrakten aus verarbeiteten Rückstandsölen (TRAE-Ölen), Aromatenextrakten aus Sicherheitsrückstandsölen (SRAE-Ölen), Mineralölen, Pflanzenölen, Äther-Weichmachern, Esterphosphat-Weichmachern, Ester-Weichmachern, Phosphat-Weichmachern, Sulfonat-Weichmachern und den Mischungen davon.

**10.** Reifen (1) gemäß Anspruch 8, wobei das (die) Kohlenwasserstoff-Harz(e) aus der Gruppe ausgewählt ist (sind), bestehend aus Cyclopentadien-Homopolymer- oder Kopolymer-Harzen, Diclyclopentadien-Homopolymer- oder Kopolymer-Harzen, Terpen-Homopolymer- oder Kopolymer-Harzen, $C_5$-Fraktionshomopolyer- oder Kopolymerharzen, $C_9$-Fraktionshomopolymer- oder Kopolymerharzen, Alpha-Methylstyrol-Homopolymer- oder Kopolymerharzen und den Mischungen davon

**11.** Reifen (1) gemäß irgendeinem der Ansprüche 1 bis 10, wobei die Partikel aus Partikeln hergestellt sind, die aus der Gruppe ausgewählt sind, bestehend aus Kalium-Tetraborat, Natrium-Tetraborat, Kalzium-Tetraborat, Kalium-Chlorid, NatriumChlorid, Zirkonerde-Kügelchen, Alkali-Feldspat, Kureha-Mikrokügelchen, Kieselerde-Sand, porösen Kieselerde-Kügelchen, Zellulosepulver, porösen Zellulose-Kügelchen, Walnuss-Schalen, Austernschalen, Chitin, Polyvinyl-Alkoholpulver, Polyethylen-Harz, Altgummi und Mischungen davon.

**12.** Reifen (1) gemäß Anspruch 11, wobei die Partikel Altgummipartikel sind, wobei die Altgummipartikel bevorzugt mechanisch verarbeitet sind.

**13.** Reifen (1) gemäß Anspruch 12, wobei die Altgummipartikel aus Altreifen erzeugt sind.

**14.** Reifen (1) gemäß irgendeinem der Ansprüche 1 bis 13, wobei ein Winkel $\alpha$ (Alpha i) der positive oder negative Winkel ist, der auf der Laufoberfläche (3) durch die i. Lamelle (6) mit der Achsenrichtung gebildet ist, wobei $|\alpha i \leq 45°$ ist.

**15.** Reifen (1) gemäß irgendeinem der Ansprüche 1 bis 14, wobei der Reifen (1) ein Winterreifen ist.

## Revendications

**1.** Pneumatique (1) comportant une bande de roulement (2) comprenant une composition de caoutchouc basée sur au moins :

- une matrice élastomère ;
- une charge de renforcement comprenant entre 80 et 200 pce d'une charge inorganique de renforcement ;
- un agent plastifiant ; et
- entre 1 et 150 pce de particules ayant une taille de particule entre 100 et 10 mesh ;

dans lequel la bande de roulement (2) comprend :

une surface de bande de roulement (3) destinée à être en contact avec le sol lorsque le pneumatique (1) roule ;
une séquence de motif(s) de base (4) agencés circonférentiellement, dans lequel chaque motif de base (4) a une largeur (Wm) s'étendant axialement sur au moins 80 % de la largeur (W) de la bande de roulement (2), chaque motif de base a un pas (P) s'étendant circonférentiellement, et chaque motif de base (4) comprend une pluralité d'éléments en relief (5), dont un ou plusieurs sont pourvus de lamelles (6) s'ouvrant sur la surface de bande de roulement (3), dans lequel chaque lamelle (6) a une largeur de moins de 1 mm et une profondeur d'au moins 3 mm ;
dans lequel la bande de roulement (2) a une densité de lamelles (SD) définie par

[Math. 1]

$$SD = \frac{\sum_i li}{P * Wm}$$

la densité de lamelles (SD) étant inférieure à 60 $\mu$m/mm$^2$ ;
où i est le nombre de lamelle (s) (6) dans le motif, $l_i$ est la longueur de la $i^{ème}$ lamelle sur la surface de bande de roulement (3), P est le pas du motif de base, Wm est la largeur du (des) motif(s) de base (4).

**2.** Pneumatique (1) selon la revendication 1, dans lequel la matrice élastomère comprend au moins un élastomère diène sélectionné à partir du groupe constitué de polybutadiènes, de polyisoprènes synthétiques, de caoutchouc naturel, de copolymères de butadiène, de copolymères d'isoprène et des mélanges de ceux-ci.

**3.** Pneumatique (1) selon la revendication 1, dans lequel la matrice élastomère comprend de 20 à 100 pce d'un premier élastomère de diène portant au moins une fonction SiOR, R étant un atome d'hydrogène ou un radical d'hydrocarbures, et optionnellement, de 0 à 80 pce d'un second élastomère de diène qui est différent du premier élastomère de diène, de préférence dans lequel le premier élastomère de diène est un copolymère de styrène-butadiène.

4. Pneumatique (1) selon la revendication 3, dans lequel la fonction SiOR est située à la fin de la chaîne du premier élastomère de diène.

5. Pneumatique (1) selon la revendication 3 ou la revendication 4, dans lequel le premier élastomère de diène a une température de transition vitreuse inférieure à -40 °C.

6. Pneumatique (1) selon l'une quelconque des revendications 1 à 5, dans lequel la charge inorganique de renforcement est de la silice.

7. Pneumatique (1) selon l'une quelconque des revendications 1 à 6, dans lequel la charge de renforcement comprend en outre moins de 40 pce de noir de carbone.

8. Pneumatique (1) selon l'une quelconque des revendications 1 à 7, dans lequel l'agent plastifiant comprend de 0 à 100 pce de plastifiant(s) liquide(s) et de 5 à 100 pce de résine(s) d'hydrocarbures ayant une température de transition vitreuse au-dessus de 20 °C, de préférence dans lequel la teneur totale du(des) plastifiant(s) liquide(s) et de la(des) résine(s) d'hydrocarbures est supérieure à 50 pce.

9. Pneumatique (1) selon la revendication 8, dans lequel le(s) plastifiant(s) liquide(s) est(sont) sélectionné(s) à partir du groupe constitué de polymères de diène liquides, d'huiles polyoléfiniques, d'huiles naphténiques, d'huiles paraffiniques, d'huiles d'extraits aromatiques de distillat (DAE), d'huiles de solvates extraits moyens (MES), d'huiles d'extraits aromatiques de distillat traités (TDAE), d'huiles d'extraits aromatiques résiduels (RAE), d'huiles d'extraits aromatiques résiduels traités (TRAE), d'huiles d'extraits aromatiques résiduels de sécurité (SRAE), d'huiles minérales, d'huiles végétales, de plastifiants d'éther, de plastifiants d'ester, de plastifiants de phosphate, de plastifiants de sulfonate et des mélanges de ceux-ci.

10. Pneumatique (1) selon la revendication 8, dans lequel la(s) résine(s) d'hydrocarbures est(sont) sélectionnée(s) à partir du groupe constitué de résines d'homopolymère ou de copolymère de cyclopentadiène, de résines d'homopolymère ou de copolymère de dicyclopentadiène, de résines d'homopolymère ou de copolymère de terpène, de résines d'homopolymère ou de copolymère de fraction $C_5$, de résines d'homopolymère ou de copolymère de fraction $C_9$, de résines d'homopolymère ou de copolymère de styrène alpha-méthylique, et de mélanges de ceux-ci.

11. Pneumatique (1) selon l'une quelconque des revendications 1 à 10, dans lequel les particules sont composées de particules sélectionnées à partir du groupe constitué de tétraborate de potassium, de tétraborate de sodium, de tétraborate de calcium, de chlorure de potassium, de chlorure de sodium, d'une perle de zircone, de feldspath alcalin, d'une microsphère de kureha, de sable de silice, d'une perle de silice poreuse, de poudre de cellulose, d'une perte de cellulose poreuse, d'une coque de noix, de coquilles d'huître, de chitine, de poudre d'alcool polyvinylique, de résine de polyéthylène, de caoutchouc en miettes, et des mélanges de ceux-ci.

12. Pneumatique (1) selon la revendication 11, dans lequel les particules sont des particules de caoutchouc en miettes, de préférence dans lequel les particules de caoutchouc en miettes sont mécaniquement traitées.

13. Pneumatique (1) selon la revendication 12, dans lequel les particules de caoutchouc en miettes sont générées à partir de pneumatiques usagés.

14. Pneumatique (1) selon l'une quelconque des revendications 1 à 13, dans lequel un angle $\alpha_i$ (alpha i) est l'angle positif ou négatif formé sur la surface de bande de roulement (3) par la $i^{ème}$ lamelle (6) avec la direction d'essieu.

15. Pneumatique (1) selon l'une quelconque des revendications 1 à 14, dans lequel le pneumatique (1) est un pneu neige.

[Fig. 1]

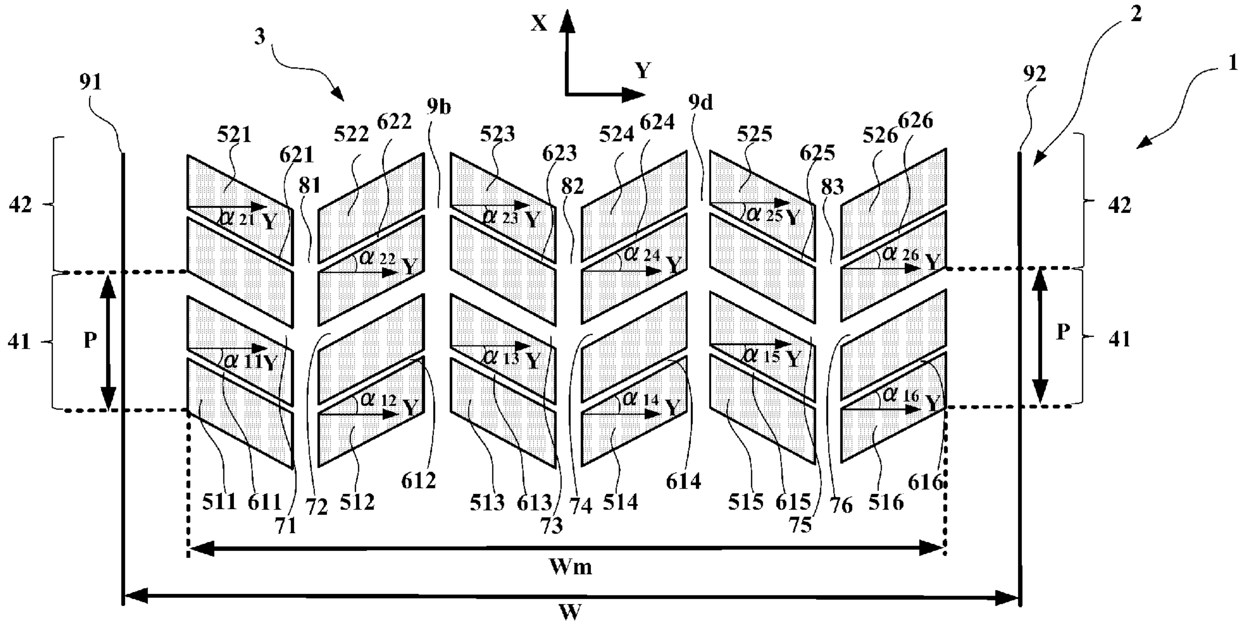


[Fig. 2]

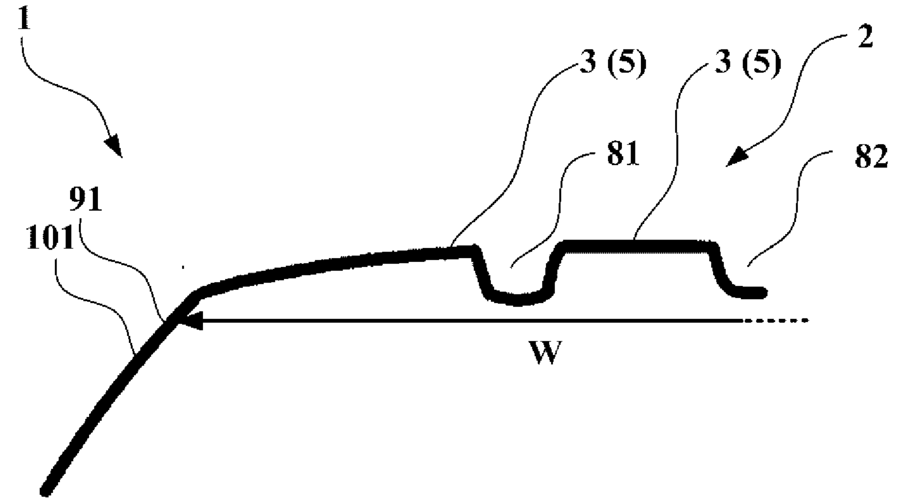


[Fig. 3]

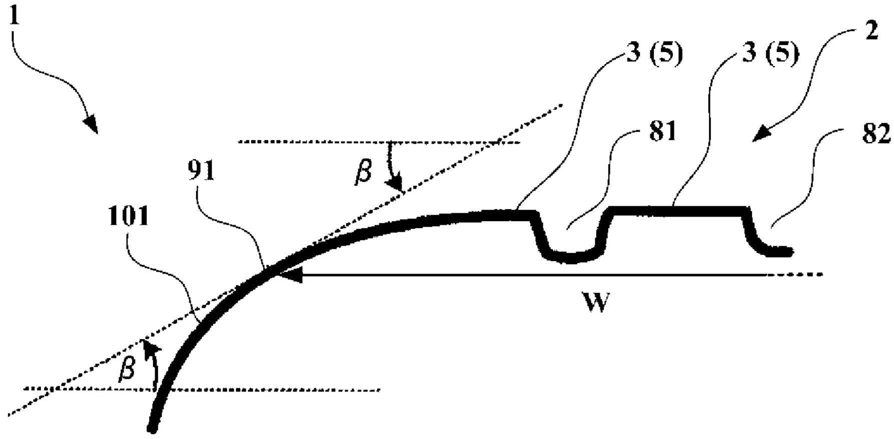

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0778311 B1
- WO 03016387 A
- WO 9637547 A
- WO 9928380 A
- WO 03002648 A
- WO 03002649 A
- WO 2004033548 A
- WO 02083782 A
- US 7217751 B
- WO 0230939 A
- US 6774255 B
- WO 0231041 A
- US 2004051210 A
- WO 2006125532 A
- WO 2006125533 A
- WO 2006125534 A
- US 6849754 B
- WO 9909036 A
- WO 2006023815 A
- WO 2007098080 A
- WO 2008055986 A
- WO 2010072685 A

### Non-patent literature cited in the description

- *The Journal of the American Chemical Society,* February 1938, vol. 60, 309
- *Rubber Chemistry and Technology*